# EUROPÄISCHE PATENTANMELDUNG

(11) **EP 0 591 878 A1**
(43) Veröffentlichungstag der Anmeldung: **13.04.1994**
(21) Anmeldenummer: 93115951.1
(22) Anmeldetag: 02.10.1993
(51) Int. Cl.: G01M 1/32

(54) **Auswuchtvorrichtung**

(30) Priorität: 07.10.1992 DE 4233656
(71) Anmelder: BURKHARDT & WEBER GMBH, D-72760 Reutlingen (DE)
(72) Erfinder: Hirlinger, Meinrad, Dipl.-Ing. (FH), D-72393 Burladingen (DE); Dietter, Eberhard, Dipl.-Ing. (FH), D-72820 Sonnenbühl (DE); Heusel, Gerhard, D-72138 Kirchentellinsfurt (DE); Dieringer, Jochen, Dipl.-Ing. (FH), D-72379 Hechingen (DE)
(74) Vertreter: Patentanwälte Bartels, Held und Partner

(57) **Zusammenfassung**

2. Die Erfindung betrifft eine Auswuchtvorrichtung, insbesondere für den Einsatz bei Werkzeugmaschinen, mit radial zu einer Drehachse 12 angeordneten Kammern 10, denen jeweils über einen separaten Kanal 16 eine Menge einer unwuchtabhängigen, fließfähigen Ausgleichsmasse zuführbar ist, wobei die jeweiligen Kanäle 16 von Absperrmitteln verschließbar sind, die entgegen der Wirkung eines Kraftspeichers 42 in eine den jeweiligen Kanal 16 freigebende Stellung bewegbar sind. Erfindungsgemäß ist vorgesehen, daß die Absperrmittel als einziges Absperrteil 22 ausgebildet sind, mit dem alle Kanäle 16 verschließbar sind, wobei die Länge des Absperrteiles 22 derart bemessen ist, daß in der Schließstellung alle Kanäle 16 von ihm überdeckt und mittels eines Dichtmittels 32 verschlossen und voneinander dichtend getrennt sind. Mit der erfindungsgemäßen Anordnung läßt sich auch im Betrieb der Vorrichtung ein im wesentlichen konstantes Trägheitsmoment beibehalten, so daß es nicht zu unkontrollierten, schwer beherrschbaren Systemzuständen kommen kann. Ferner läßt sich mit der erfindungsgemäßen Auswuchtvorrichtung ein beschleunigter und vollständiger Entleervorgang der Kammern sowie ein definiertes Schalten von der Offenstellung in die Schließstellung erreichen.

## Beschreibung

Die Erfindung betrifft eine Auswuchtvorrichtung, insbesondere für den Einsatz bei Werkzeugmaschinen, mit radial zu einer Drehachse angeordneten Kammern, denen jeweils über einen separaten Kanal eine Menge einer unwuchtabhängigen, fließfähigen Ausgleichsmasse zuführbar ist, wobei die jeweiligen Kanäle von Absperrmitteln verschließbar sind, die entgegen der Wirkung eines Kraftspeichers in eine den jeweiligen Kanal freigebende Stellung bewegbar sind.

Dahingehende Auswuchtvorrichtungen werden von der Firma HOFMANN unter der Bezeichnung "hydrokompenser hk 5000" vertrieben. Die bekannte Vorrichtung wird vorwiegend bei Schleifmaschinen eingesetzt, bei denen von der Unwucht der Schleifscheibe verursachte Schwingungen entstehen. Mit Zunahme der Schleifgeschwindigkeit nehmen die aus der Unwucht sich ergebenden Fliehkräfte quadratisch zu und ein kontrollierter Schleifprozeß ist dadurch verhindert. Ferner ändert sich die Unwucht während des Schleif- und Abrichtprozesses.

Über einen Schwingungsaufnehmer läßt sich über eine Meß- und Regeleinheit im Betrieb der Schleifscheibe die Unwucht ihrer Größe und Lage nach ermitteln und die eingehenden Meßwerte lassen sich zur Steuerung des Auswuchtvorganges aufbereiten. Für einen Auswuchtvorgang ist eine Ausgleichsmasse in Form von Emulsion, aber auch Öl oder Wasser über vier Einspritzdüsen in vier voneinander getrennte Kammern einfüllbar, die in einem vorgebbaren radialen und gleich großen Abstand voneinander um die Drehachse der Schleifscheibe herum angeordnet sind. Der bekannte Befüllvorgang läuft für eine oder mehrere Kammern so lange ab, bis die Diagnose- und Überwachungseinheit das Beseitigen der Unwucht meldet.

Dieses bekannte Verfahren zum Auswuchten läßt sich prinzipiell für jedes sich um eine Achse drehende Teil verwenden, also auch bei Dreh- und Fräsmaschinen sowie bei Radantrieben od.dgl.. Bei der bekannten Auswuchtvorrichtung ist in jedem Kanal, der zu einer Kammer führt, eine Art Rückschlagventil eingesetzt, das insbesondere bei Stillstand der Vorrichtung ein Zurücklaufen der Ausgleichsmasse aus den Kammern ins Freie verhindert. Sind bei der bekannten Vorrichtung nach einer gewissen Anzahl von Auswuchtvorgängen die Kammern mit der Ausgleichsmasse vollständig befüllt, müssen diese entleert werden, um weitere Auswuchtvorgänge zu ermöglichen. Hierzu wird in der Regel stirnseitig eine Frontplatte abgeschraubt, die die Kammern freigibt, so daß durch Ausgießen oder Ausschütten die Kammern entleerbar sind.

Bei einer weiteren gattungsgemäßen Auswuchtvorrichtung, insbesondere für Schleifkörper mit beliebiger Achslage nach der DE 34 28 078 A1, sind die einzelnen Absperrmittel zum Verschließen der jeweiligen Kanäle ebenfalls aus Kugeln eines Rückschlagventiles gebildet, die entgegen der Wirkung eines Kraftspeichers in Form einer Feder im Rückschlagventil in eine den jeweiligen Kanal freigebende Stellung bewegbar sind.

Bei diesen bekannten Auswuchtvorrichtungen nehmen mit Zunahme der Schleifscheibenumfangsgeschwindigkeit auch die Fliehkräfte zu, so daß in der freigegebenen Stellung die Kugeln der Rückschlagventile eine andere Position einnehmen, so daß sich ständig in Abhängigkeit von der Drehgeschwindigkeit die Trägheitsmomente von Auswuchtvorrichtung mit aufgespanntem Werkzeug in Form der Schleifscheibe ändern. Eine Änderung, die nur schwer erfaß- und berechenbar ist, ebenso wie die definierte Position, bei der das jeweilige Ventil öffnen oder schließen soll. Ferner ergibt sich eine große Teilevielfalt, was die bekannten Auswuchtvorrichtungen teuer in der Herstellung macht und zu Störungen im Betrieb führt.

Ausgehend von diesem Stand der Technik liegt der Erfindung die Aufgabe zugrunde, eine verbesserte Auswuchtvorrichtung zu schaffen, die die oben beschriebenen Nachteile vermeidet. Diese Aufgabe löst eine Auswuchtvorrichtung mit den Merkmalen des Anspruches 1.

Dadurch, daß gemäß dem kennzeichnenden Teil des Hauptanspruches die Absperrmittel als ein einziges Absperrteil ausgebildet sind, mit dem alle Kanäle verschließbar sind, und dessen Länge derart bemessen ist, daß in der Schließstellung alle Kanäle von ihm überdeckt und mittels eines Dichtmittels verschlossen und voneinander dichtend getrennt sind, ist die Teilevielfalt entschieden reduziert, was die Störanfälligkeit und die Herstellkosten vermindert. Mit der erfindungsgemäßen Anordnung läßt sich auch im Betrieb der Vorrichtung ein im wesentlichen konstantes Trägheitsmoment beibehalten, so daß es nicht zu unkontrollierten, schwer beherrschbaren Systemzuständen kommen kann. Ferner läßt sich mit der erfindungsgemäßen Auswuchtvorrichtung ein beschleunigter und vollständiger Entleervorgang der Kammern sowie ein definiertes Schalten von der Offenstellung in die Schließstellung erreichen.

Bei einer bevorzugten Ausführungsform der erfindungsgemäßen Auswuchtvorrichtung ist das Absperrteil längs der Drehachse innerhalb eines Aufnahmeraumes verfahrbar, in den die Kanäle jeweils über eine Ringnut münden, die in einem Gehäuseteil der Vorrichtung angeordnet sind. Hierdurch ergibt sich eine besonders günstige Massenverteilung bei Betätigung der Auswuchtvorrichtung. Das in der Art eines Schiebers wirkende Absperrteil läßt sich aber auch in einer Achse quer zur Drehachse anordnen, wobei mehrere radial symmetrisch zueinander angeordnete Absperrelemente vorgesehen sein können.

Bei einer weiteren bevorzugten Ausführungsform der erfindungsgemäßen Auswuchtvorrichtung besteht das Dichtmittel aus einzelnen Dichtringen, die zwischen den Ringnuten in dem Gehäuseteil angeordnet sind, wobei das Absperrteil aus einem Kolben mit zylindrischer Außenumfangsfläche gebildet ist. Sobald diese zylindrische Außenumfangsfläche in Anlage mit den Gehäuse-Dichtringen ist, ist eine gute Dichtwirkung erreicht und insbesondere eine sichere Trennung der Ausgleichskammern und der ihnen zugeordneten Kanäle untereinander erreicht.

Bei einer weiteren besonders bevorzugten Ausführungsform der erfindungsgemäßen Auswuchtvorrichtung hat das Dichtmittel die Form eines Hohlzylinders, der von dem Absperrteil durchgriffen ist und aus einem elastisch nachgiebigen Material besteht, wobei in der Schließstellung das Absperrteil mit einer axialen und/oder radialen Kraftkomponente auf das Dichtmittel einwirkt. Hierdurch ist ein verschleißfreier Betrieb erreicht, denn erst in der Schließstellung braucht das Dichtmittel die notwendige Dichtkraft aufzubringen.

Vorzugsweise weist hierbei das Absperrteil zwei gegeneinander bewegbar gehaltene Kolbenteile auf, die an ihren einander abgewandten Enden Anlagefläche für das Dichtmittel bilden, die in der freigebenden Stellung oder in der Schließstellung einen vorgebbaren Abstand voneinander aufweisen, der größer bzw. kleiner ist als die Länge des Dichtmittels im unverformten Zustand.

Sofern vorzugsweise hierbei die miteinander in Anlage befindlichen Flächen von Absperrteil und Dichtmittel konisch ausgebildet sind, läßt sich über die gesamte Länge des angesprochenen Aufnahmeraumes, in den die Ringnuten münden, eine im wesentlichen gleichmäßige, radial wirkende Dichtkraft aufbringen.

Bei einer anderen, besonders bevorzugten Ausführungsform der erfindungsgemäßen Auswuchtvorrichtung besteht das Dichtmittel aus einzelnen Lippenringen, die längs des Außenumfanges innerhalb des Absperrteiles angeordnet sind und die einen axialen Abstand voneinander aufweisen, der größer ist als die Breite einer Ringnut. Bei diesen Lippenringen handelt es sich um Standardbauteile, die besonders kostengünstig erhältlich sind, was insgesamt die Herstellkosten erniedrigt. Bei einem Verschleiß des Dichtmittels lassen sich die jeweiligen Lippenringe einfach austauschen, so daß auch die Wartungskosten niedrig sind.

Bei einer weiteren anderen bevorzugten Ausführungsform der erfindungsgemäßen Auswuchtvorrichtung ist das Dichtmittel aus einer Art Speicherblase gebildet, die mittels eines Druckmediums aufblähbar ist. Vorzugsweise ist hierbei der auf das Druckmedium einwirkende Druck von dem Absperrteil erzeugbar, das eine Pumpvorrichtung aufweist oder diese unmittelbar bildet. Hierdurch läßt sich in vorgebbaren Grenzen die Dichtkraft über die Pumpvorrichtung frei einstellen.

Bei einer bevorzugten Ausführungsform der erfindungsgemäßen Auswuchtvorrichtung ist mittels eines Dornes das Absperrteil in seine freigebende Stellung bewegbar, wobei der Dorn eine jedem Kanal zugeordnete Zuführleitung für die Ausgleichsmasse aufweist. Auf diese Art und Weise läßt sich von außen her im Betrieb der Auswuchtvorrichtung ein Auswuchtvorgang vornehmen. Vorzugsweise weist hierbei der Dorn mindestens eine Entleerleitung auf, die einen Ringkanal ausbildet, in den alle Kanäle münden. Auf diese Art und Weise läßt sich im Betrieb der Vorrichtung mit demselben Dorn ein gleichzeitiger Entleervorgang aller vorgesehenen Kammern durchführen.

Zum Absaugen der Ausgleichsmasse aus den Kammern kann vorzugsweise hierbei die Entleerleitung an eine Unterdruckeinrichtung angeschlossen sein, die vorzugsweise eine Ringdüse aufweist, durch die Druckluft hindurchleitbar ist. Es lassen sich dann über einen üblichen Druckluftanschluß, der beispielsweise einen Druck von 1 bis 4 bar erzeugt, die Kammern vollständig von der Ausgleichsmasse entleeren. Es hat sich hierbei als vorteilhaft erwiesen, den Spalt der Ringdüse durch zwei geradlinig verlaufende Kegelstumpfflächen zu erzeugen.

Der in Rede stehende Dorn kann auch Zuführleitungen zum Befüllen aufweisen, wobei dann an die Stelle des Ringkanales der Entleerleitung eine Endnut tritt, so daß eine Trennung von Entleer- und Zuführleitungen erreicht ist.

Im folgenden wird die erfindungsgemäße Auswuchtvorrichtung anhand der Zeichnung näher erläutert.

Es zeigen in prinzipieller und vereinfachter Darstellung die
- Fig.1: einen Längsschnitt durch die Auswuchtvorrichtung beim Befüllen derselben;
- Fig.2: eine stirnseitige Draufsicht auf die Auswuchtvorrichtung;
- Fig.3: einen Längsschnitt mit dem Absperrteil in Schließstellung;
- Fig.4: einen Längsschnitt durch die Auswuchtvorrichtung beim Entleeren derselben;
- Fig.5: einen Längsschnitt durch eine andere Ausführungsform der Auswuchtvorrichtung mit der Unterdruckeinrichtung.

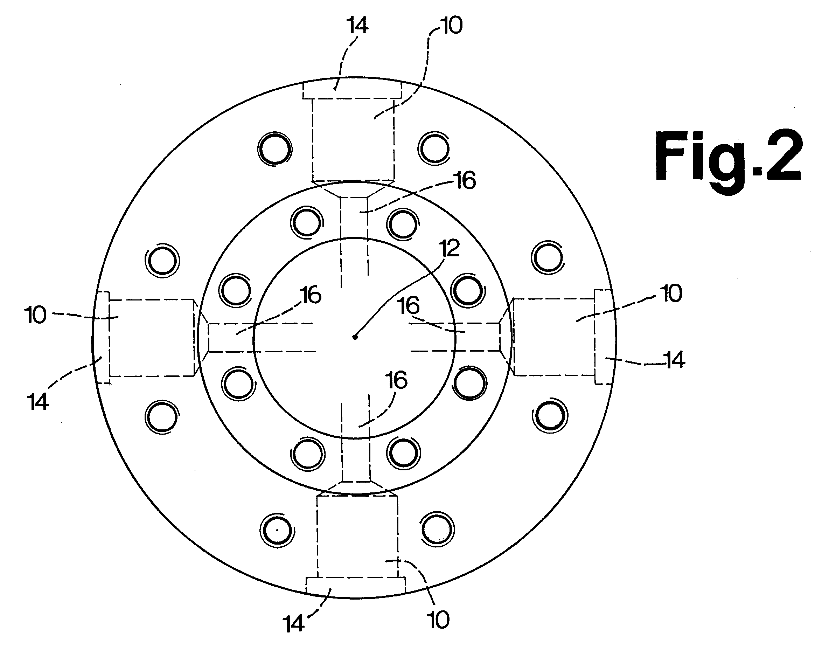

Die Auswuchtvorrichtung bildet im wesentlichen ein rotationssymmetrisches Teil aus mit vier Kammern 10, die mit vorgebbaren gleichen radialen Abständen voneinander um die Drehachse 12 angeordnet sind (Fig.2). Jede Kammer 10 weist nach außen hin einen verschraubbaren Abschlußstopfen 14 auf und ist über einen separaten Kanal 16, der sich quer zur Drehachse 12 erstreckt, mit einer vorgebbaren Menge an Ausgleichsmasse befüllbar. Als Ausgleichsmasse kommt dem Grunde nach jedes fließfähige Material, insbesondere Fluide, in Frage, aber auch rieselfähige Stoffe, beispielsweise in Form von Granulat.

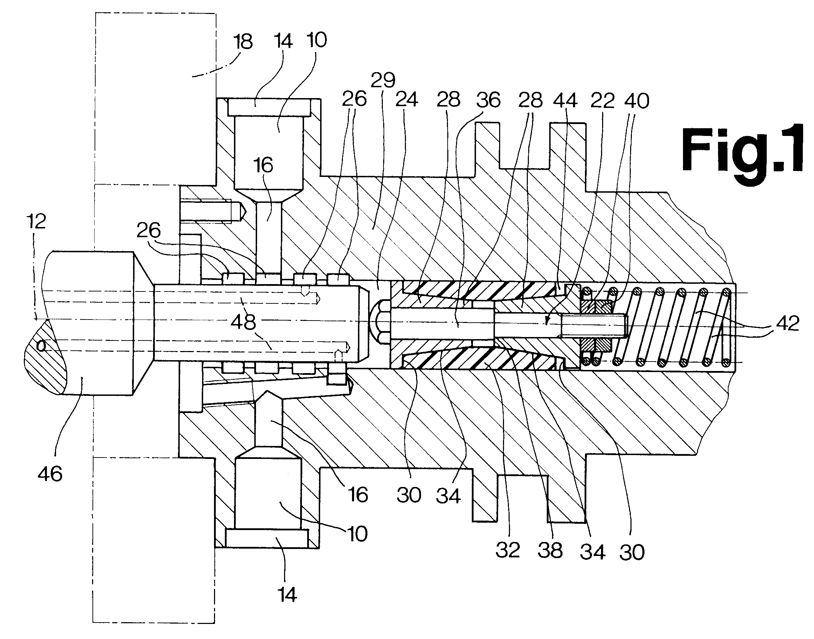

Im vorliegenden Fall wird die Auswuchtvorrichtung bei einer Schleifscheibe 18 (Fig.1) zum Einsatz gebracht, die stirnseitig über eine Schraubverbindung mit der eigentlichen Auswuchtvorrichtung verbindbar ist. Die Schleifscheibe 18 läßt sich dann zusammen mit der Auswuchtvorrichtung über ein übliches Greifersystem (nicht dargestellt) in eine Werkzeugmaschine (nicht dargestellt) einwechseln. Innerhalb der Auswuchtvorrichtung ist ein verschiebbares Absperrteil 22 angeordnet, das der Einfachheit halber in Fig.2 nicht dargestellt ist.

Das als Ganzes mit 22 bezeichnete Absperrteil ist längs der Drehachse 12 innerhalb eines zylindrischen Aufnahmeraumes 24 der Vorrichtung verfahrbar, in den die Kanäle mit ihren der Kammer 10 abgekehrten Enden jeweils über eine Ringnut 26 münden. Das Absperrteil 22 weist zwei gegeneinander bewegbare Kolbenteile in Form von Hülsen 28 auf, die an ihren einander abgewandten Enden ringartige Anlageflächen 30 für das Dichtmittel 32 aufweisen. Die jeweilige Ringnut 26 ist Teil des Gehäuses 29 der Vorrichtung.

Das Dichtmittel 32 besteht aus einem Kunststoff- oder Kautschukmaterial mit guter Gleit- und Dichteigenschaft und bildet im wesentlichen einen Hohlzylinder aus, der von dem Absperrteil 22 in Form der beiden Hülsen 28 durchgriffen ist. Die miteinander in Anlage befindlichen Flächen 34 von den beiden Hülsen 28 des Absperrteiles 22 und dem Dichtmittel 32 sind konisch ausgebildet. Die beiden Hülsen 28 sind von einem Bolzen 36 mit Schraubgewinde durchgriffen, wobei der Bolzen 36 einen Absatz 38 aufweist, an dem sich die Hülse 28 abstützt, die dem Schraubenkopf des Bolzens 36 abgekehrt ist. Diese Hülse 28 ist mittels Kontermuttern 40 in einer stationären Lage auf dem Bolzen 36 gelagert. Die andere Hülse 28, die dem Schraubenkopf des Bolzens 36 zugewandt ist, stützt sich an diesem endseitig ab und weist in jedem Zustand des Absperrteiles 22 einen axialen Abstand zu der anderen Hülse 28 auf. Ferner ist sie um einen vorgebbaren Verfahrweg längs des Bolzens 36 axial verschiebbar.

Das Absperrteil 22 stützt sich an seinem der Werkzeugmaschine (nicht dargestellt) zugekehrten Ende auf einer Schraubenfeder 42 ab, die bei der Betriebsstellung gemäß Fig.1 einen vorgespannten Zustand einnimmt. Wie sich insbesondere aus der Fig.1 ergibt, weisen die einander gegenüberliegenden Anlageflächen 30 in der Freigabestellung des Absperrteiles 22 einen vorgebbaren Abstand 44 in Form eines axialen Spieles voneinander auf, der größer ist als die Länge des Dichtmittels 32 im unverformten Zustand.

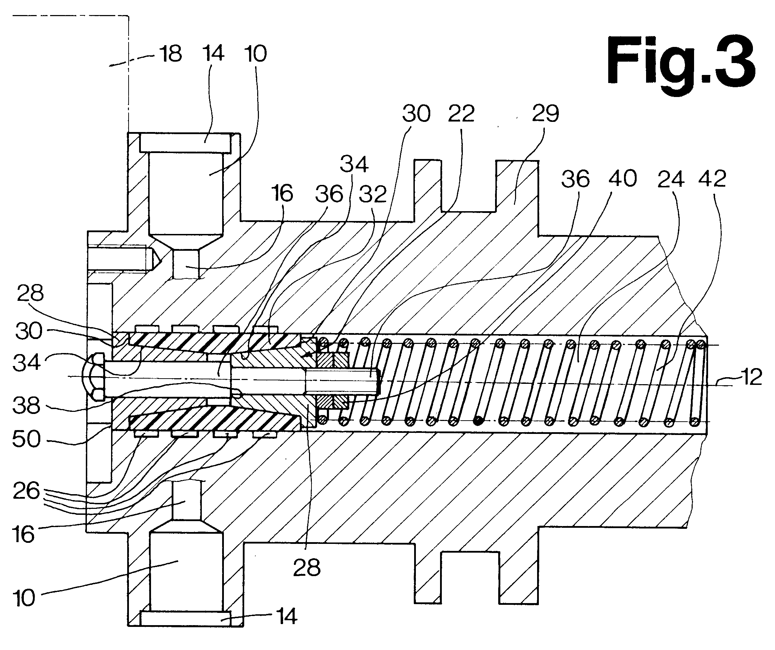

Die Fig.1 gibt die Situation eines Befüllvorganges wieder. Stellt sich beim Betrieb der Schleifscheibe unabhängig von ihrer Arbeitsdrehzahl eine Unwucht ein, wird diese über das bereits angesprochene bekannte Meßsystem erfaßt und über bekannte und daher nicht näher dargestellte Zuführeinrichtungen wird ein Dorn 46 in den Aufnahmeraum 24 verfahren, wobei er das Absperrteil 22 aus seiner in der Fig.3 dargestellten Schließstellung in seine freigebende Stellung gemäß der Darstellung in Fig.1 entgegen der Federkraft der Schraubenfeder 42 verfährt. Hierbei kommt es zu einer stirnseitigen Anlage zwischen dem freien Ende des Dornes 46 und dem Schraubenkopf des Bolzens 36.

Innerhalb des Dornes 46 verlaufen Zuführleitungen 48, von denen in der Fig.1 der Einfachheit halber nur zwei Stück dargestellt sind, die aber für jede Ringnut 26 vorhanden sind und in diese voneinander getrennt münden. Je nach Vorgabe der Steuereinrichtung wird nun so lange von einer Vorratsstation über eine oder mehrere der Zuführleitungen 48 eine Ausgleichsmasse (nicht dargestellt) in die jeweilige Kammer 10 eingefüllt oder eingespritzt, bis die Unwucht beseitigt ist. Anschließend wird der Dorn 46 zurückgezogen, wobei er kontinuierlich den Aufnahmeraum 24 freigibt und kontinuierlich mit sich entspannender Schraubenfeder 42 das Absperrteil 22 nachgeführt wird, das nacheinander von innen nach außen zur Umgebung hin die Ringkanäle 26 und damit die Kanäle 16 abschließt.

Die vollständige Schließstellung ist in Fig.3 wiedergegeben. Aufgrund der Federkraft der Schraubenfeder 42 befindet sich nun das Absperrteil 22 in seiner in der Fig.3 dargestellten äußerst linken Stellung, wobei die zur Umgebung hin gewandte Hülse 28 in Anlage mit einem ringartigen Vorsprung 50 der Auswuchtvorrichtung ist. Die Kraft der Schraubenfeder 42 ist nun derart bemessen, daß sie den vorgebbaren Abstand 44 überwindet; mithin also die beiden Hülsen 28 aufeinander zubewegt, wobei sich der Schraubenkopf des Bolzens 36, wie in der Fig.3 gezeigt, von seinem Sitz abhebt. Aufgrund der nunmehr ausgeübten axialen Kraft und aufgrund der radialen Kraftkomponente, die von den konischen Flächen 34 ausgeübt wird, dehnt sich im wesentlichen gleichförmig das hohlzylinderartige Dichtmittel 32 nach außen hin aus und verschließt dichtend den jeweiligen Kanal 16. Wird nun die Auswuchtvorrichtung mittels des Greifersystems aus der Werkzeugmaschine entfernt, ist mit Sicherheit ein Auslaufen der fließfähigen Ausgleichsmassen aus den Kammern 10 vermieden.

Sind die Kammern 10 nach einer Vielzahl von Auswuchtvorgängen mit der Ausgleichsmasse vollständig befüllt, lassen sich diese im Betrieb der Schleifscheibe 18 entleeren. Hierzu wird der angesprochene Dorn 46 wiederum in den Aufnahmeraum 24 gebracht, wobei er mit einer in ihm verlaufenden Entleerleitung 52, die einen Ringkanal 54 ausbildet, alle Ringnuten 26 überdeckt, so daß über diese sämtliche Ausgleichsmassen in den Kammern 10 nach außen hin entleert werden können. Die Schleifscheibe mit der Auswuchtvorrichtung hat hierbei eine Drehzahl einzunehmen, die derart bemessen ist, daß die vorhandenen Fliehkräfte ein Ausleeren der Ausgleichsmasse aus den Kammern 10 nicht behindern. Nach dem Entleervorgang kann über die Zuführleitungen 48 des Dornes 46 dann für einen neuen Auswuchtvorgang ein Befüllen der Kammern 10 stattfinden. Ein schnelles Entleeren über die Zuführleitungen 48 ist aufgrund ihrer kleinen Querschnitte, die hohe Einspritzgeschwindigkeiten für die Ausgleichsmasse gewährleisten sollen, nicht möglich.

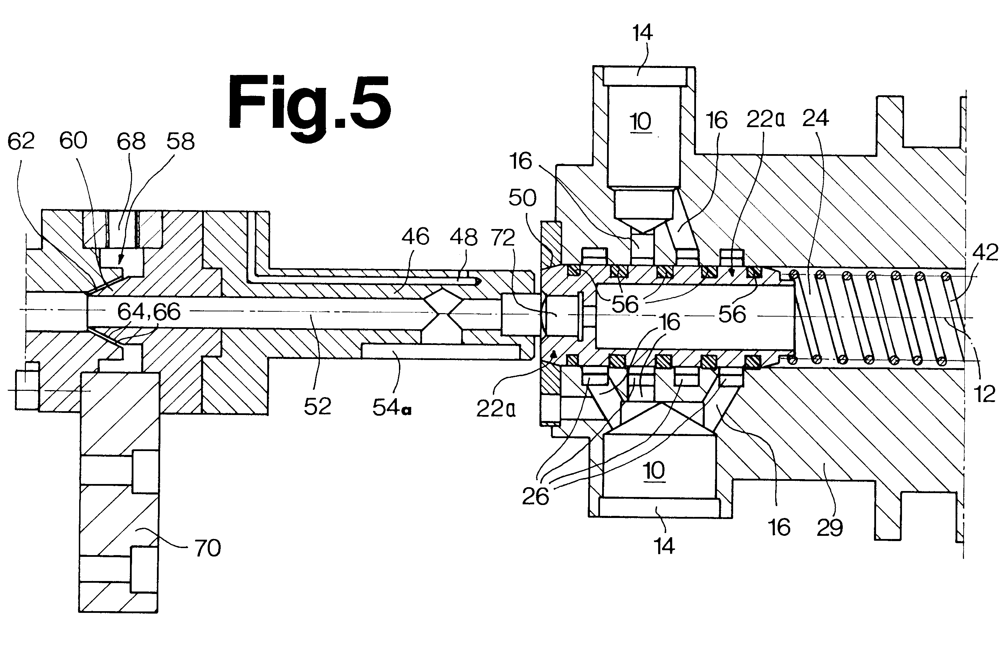

Bei der Ausführungsform nach der Fig.5 ist dort eine als Ganzes mit 58 bezeichnete Unterdruckeinrichtung dargestellt, die zum Absaugen der Ausgleichsmasse aus den Kammern 10 an die Entleerleitung 52 des Dornes 46 angeschlossen ist. Die Unterdruckeinrichtung 58 weist eine Ringdüse 60 auf, durch die Druckluft hindurchleitbar ist. Die Ringdüse 60 hat einen Spalt 62, der von zwei geraden Kegelstumpfflächen 64,66 begrenzt ist. Die Unterdruckeinrichtung 58 weist ferner einen Druckluftanschluß 68 auf, über den Druckluft zwischen 1 bis 4 bar in die Unterdruckeinrichtung 58 einblasbar ist. Die Ringdüse 60, die mit der Druckluft beaufschlagt ist, bewirkt durch den Venturi-Effekt, daß in der Entleerleitung 52 ein Unterdruck herrscht, der es erlaubt, über die Endnut 54a, sobald diese in Deckung mit den Ringnuten 26 ist, die Kammern 10 zu entleeren. Die Ausgleichsmasse wird hierbei von der Endnut 54a ausgehend über die Entleerleitung 52 in Strömungsrichtung in der Fig.5 gesehen von rechts nach links aus der Unterdruckeinrichtung 58 hinaus ins Freie oder in einen Sammelbehälter (nicht dargestellt) befördert. Bei der vorliegenden Ausführungsform nach der Fig.5 ist die Entleerleitung 52 durchgehend ausgebildet und mündet mit ihrem einen Ende an der Stelle des freien Endes des Dornes 46 in die Umgebung. Die Unterdruckeinrichtung 58 mit dem Dorn 46 wird über eine Transporteinrichtung, von der in der Fig.5 nur eine Halteplatte 70 dargestellt ist, bewegt und längsverfahren.

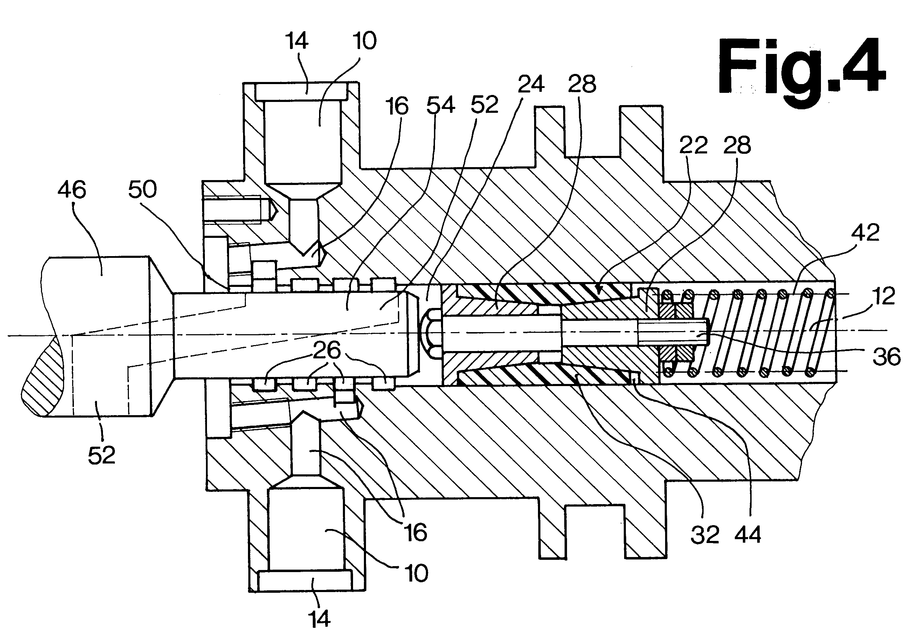

Das gegenüber den Darstellungen in den Fig.1 bis 4 modifizierte Absperrteil 22a bildet einen Hohlkolben aus, der längs seines Außenumfanges Ringnuten aufweist, in die die einzelnen Lippenringe 56 eingesetzt sind. Diese Lippenringe 56 weisen einen axialen Abstand voneinander auf, der größer ist als die Breite einer Ringnut 26 in dem Gehäuseteil 29; mithin ist also jede Ringnut 26 in der Schließstellung des Absperrteiles 22a, wie es in der Fig.5 dargestellt ist, von einem Lippenring 56 randseitig begrenzt und hermetisch verschlossen. Auch bei der vorliegenden Ausführungsform wird das Absperrteil 22a durch die Druckfeder 42 in ihrer Schließstellung gehalten. Der Vorsprung 50 des Gehäuseteiles 29 ist im vorliegenden Fall nach außen sich konisch verringernd ausgebildet und das Absperrteil 22a kann sich mit seinem konisch verjüngten Ende an den Vorsprung 50 anlegen. Das als Hohlzylinder ausgebildete Absperrteil 22a weist stirnseitig zur Umgebung hin eine Anlauf- oder Anschlagfläche 72 auf, die es der Unterdruckeinrichtung 58 erlaubt, verschleißarm das Absperrteil 22a zurückzuschieben. Das Absperrteil 22a wird in der Fig.5 gesehen nach rechts in seine Offenstellung entgegen der Kraftwirkung der Feder 42 bewegt, sobald der Dorn 46 in den Aufnahmeraum 24 über die Unterdruckeinrichtung 58 und die Halteplatte 70 mittels der Transporteinrichtung (nicht dargestellt) für einen Befüll- und/oder Entleervorgang eingeführt wird.

## Patentansprüche

1. Auswuchtvorrichtung, insbesondere für den Einsatz bei Werkzeugmaschinen, mit radial zu einer Drehachse (12) angeordneten Kammern (10), denen jeweils über einen separaten Kanal (16) eine Menge einer unwuchtabhängigen, fließfähigen Ausgleichsmasse zuführbar ist, wobei die jeweiligen Kanäle (16) von Absperrmitteln verschließbar sind, die entgegen der Wirkung eines Kraftspeichers (42) in eine den jeweiligen Kanal (16) freigebende Stellung bewegbar sind, dadurch gekennzeichnet, daß die Absperrmittel als ein einziges Absperrteil (22,22a) ausgebildet sind, mit dem alle Kanäle (16) verschließbar sind, und dessen Länge derart bemessen ist, daß in der Schließstellung alle Kanäle (16) von ihm überdeckt und mittels eines Dichtmittels (32) verschlossen und voneinander dichtend getrennt sind.

2. Auswuchtvorrichtung nach Anspruch 1, dadurch gekennzeichnet, daß das Absperrteil (22,22a) längs der Drehachse (12) innerhalb eines Aufnahmeraumes (24) verfahrbar ist, in den die Kanäle (16) jeweils über eine Ringnut (26) münden, die in einem Gehäuseteil (29) der Vorrichtung angeordnet sind.

3. Auswuchtvorrichtung nach Anspruch 2, dadurch gekennzeichnet, daß das Dichtmittel (32) aus einzelnen Dichtringen besteht, die zwischen den Ringnuten (26) in dem Gehäuseteil (29) angeordnet sind, und daß das Absperrteil (22) aus einem Kolben mit zylindrischer Außenumfangsfläche gebildet ist.

4. Auswuchtvorrichtung nach Anspruch 1 oder 2, dadurch gekennzeichnet, daß das Dichtmittel (32) die Form eines Hohlzylinders hat, der von dem Absperrteil (22) durchgriffen ist und aus einem elastisch nachgiebigen Material besteht, und daß in der Schließstellung das Absperrteil (22) mit einer axialen und/oder radialen Kraftkomponente auf das Dichtmittel (32) einwirkt.

5. Auswuchtvorrichtung nach Anspruch 4, dadurch gekennzeichnet, daß das Absperrteil (22) zwei gegeneinander bewegbar gehaltene Kolbenteile (28) aufweist, die an ihren einander abgewandten Enden Anlageflächen (30) für das Dichtmittel (32) bilden, die in der freigebenden Stellung oder in der Schließstellung einen vorgebbaren Abstand (44) voneinander aufweisen, der größer bzw. kleiner ist als die Länge des Dichtmittels (32) im unverformten Zustand.

6. Auswuchtvorrichtung nach Anspruch 4 oder 5, dadurch gekennzeichnet, daß die miteinander in Anlage befindlichen Flächen (34) von Absperrteil (22) und Dichtmittel (32) konisch ausgebildet sind.

7. Auswuchtvorrichtung nach Anspruch 1 oder 2, dadurch gekennzeichnet, daß das Dichtmittel (32) aus einzelnen Lippenringen (56) besteht, die längs des Außenumfanges innerhalb des Absperrteiles (22a) angeordnet sind, und die einen axialen Abstand voneinander aufweisen, der größer ist als die Breite einer Ringnut (26).

8. Auswuchtvorrichtung nach Anspruch 1 oder 2, dadurch gekennzeichnet, daß das Dichtmittel aus einer Speicherblase gebildet ist, die mittels eines Druckmediums aufblähbar ist.

9. Auswuchtvorrichtung nach Anspruch 8, dadurch gekennzeichnet, daß der auf das Druckmedium einwirkende Druck von dem Absperrteil (22) erzeugbar ist, das eine Pumpvorrichtung aufweist oder diese unmittelbar bildet.

10. Auswuchtvorrichtung nach einem der Ansprüche 1 bis 9, dadurch gekennzeichnet, daß mittels eines Dornes (46) das Absperrteil (22,22a) in seine freigebende Stellung bewegbar ist und daß der Dorn (46) eine jedem Kanal (16) zugeordnete Zuführleitung (48) für die Ausgleichsmasse aufweist.

11. Auswuchtvorrichtung nach Anspruch 10, dadurch gekennzeichnet, daß der Dorn (46) mindestens eine Entleerleitung (52) aufweist, die einen Ringkanal (54) oder eine Endnut (54a) ausbildet, in den alle Kanäle (16) münden.

12. Auswuchtvorrichtung nach Anspruch 11, dadurch gekennzeichnet, daß die Entleerleitung (52) zum Absaugen der Ausgleichsmasse aus den Kammern (10) an eine Unterdruckeinrichtung (58) angeschlossen ist.

13. Auswuchtvorrichtung nach Anspruch 12, dadurch gekennzeichnet, daß die Unterdruckeinrichtung (58) eine Ringdüse (60) aufweist, durch die Druckluft hindurchleitbar ist.

14. Auswuchtvorrichtung nach Anspruch 13, dadurch gekennzeichnet, daß die Ringdüse (60) einen Spalt (62) aufweist, der von zwei geraden Kegelstumpfflächen (64,66) begrenzt ist.
